# EUROPÄISCHE PATENTSCHRIFT

(11) **EP 1 408 803 B1**
(45) Veröffentlichungstag und Bekanntmachung des Hinweises auf die Patenterteilung: **22.11.2006**
(21) Anmeldenummer: 02742676.6
(22) Anmeldetag: 12.04.2002
(51) Int. Cl.: A47J 19/02

(54) **CAIPIRINHA-PRESSE SOWIE ARBEITSVERFAHREN DAFÜR**
CAIPIRINHA PRESS AND ITS OPERATING METHOD
PRESSE A CAIPIRINHA ET SON MODE OPERATOIRE

(30) Priorität: 29.05.2001 DE 20108877 U
(43) Veröffentlichungstag der Anmeldung: 21.04.2004
(73) Patentinhaber: Meyer, Thomas, 27432 Bevern (DE)
(72) Erfinder: Meyer, Thomas, 27432 Bevern (DE)
(74) Vertreter: Hansen, Jochen
(86) Internationale Anmeldenummer: PCT/DE2002/001372
(87) Internationale Veröffentlichungsnummer: WO 2002/096250

(56) Entgegenhaltungen:
- DE-U- 20 012 332
- DE-U- 20 017 944
- US-A- 2 507 963
- US-A- 2 703 522

## Beschreibung

Die Erfindung betrifft eine Caipirinha-Presse mit einem Preßstempel zum Zerdrücken von in einem Glas eingelegten Limettenstücken und mit einer Einrichtung zum Absenken des Preßstempels in das Glas, wobei der Preßstempel beim Absenken in das Glas eine Drehbewegung aufweist.

Eine derartige Vorrichtung ist aus dem DE 200 12 332 U1 bekannt. Die dort beschriebene Caipirinha-Maschine weist ein an einem Ständer absenkbar angebrachtes Druckstück zum Zerdrücken von Limettenstücken auf. In weiterer Ausgestaltung soll das Druckstück beim Absenken in das Glas eine Drehbewegung aufweisen. Wie dies technisch zu bewerkstelligen ist, ist nicht beschrieben.

Aus der DE 200 17 944 U ist eine Caipirinha-/Mojito-Maschine bekannt, die als freies Handgerät auf ein Getränkeglas aufsetzbar ist und einen Drücker mit Stößel aufweist. Durch Herunterdrücken des Drückers sollen die im Glas aufgenommenen Limettenviertel zerdrückt werden. Ferner soll der Drücker in bevorzugter Ausführung beim Heruntergehen durch spezielle Kerben im Führungsteil eine leichte Drehbewegung machen und somit die typische Drehung nachahmen. Durch eine Feder wird der Drücker wieder in seine Grundstellung gebracht.

Ferner ist aus der WO 99/56 599 A1 ein Zitrusfruchtentsafter mit einem oberen und unteren Fruchthalter bekannt, wobei der obere Fruchthalter mit einer Hebelanordnung unter hohem Druck absenkbar ist. Diese Vorrichtung weist zwar einen Ober eine Hebelanordnung absenkbaren oberen Fruchthalter auf, jedoch werden die halbierten Zitrusfrüchte zwischen den beiden Fruchthaltern lediglich durch Aufeinanderpressen entsaftet. Der Saft wird in einem darunter gestellten Glas aufgefangen. Die Schale der Zitrusfrucht verbleibt zwischen den beiden Fruchthaltern und wird nach dem Preßvorgang weggeworfen. Diese Vorrichtung eignet sich folglich nicht zur Vorbereitung von Caipirinha-Getränken.

Die US 2,507,963 zeigt eine Saftpresse für Zitronen, Apfelsinen oder andere Früchte in einer grundsätzlichen Ausbildung ähnlich zur WO 99/56599 A1 mit einem oberen und einem unteren, im wesentlich an die Fruchtform angepassten Halter, der den erwünschten Auspressdruck im wesentlichen beschränkt auf das in der Fruchtschale aufgenommene Fruchtfleisch erzeugt. Dabei ist diese Saftpresse so ausgebildet, dass über eine Spindelanordnung der obere Fruchthalter und durch eine weitere Spindelanordnung der untere Fruchthalter bei Druckbeaufschlagung gegeneinander rotieren. Für die Zubereitung von Caipirinha-Getränken ist diese Saftpresse jedoch nicht geeignet.

Ein Caipirinha ist ein brasilianisches Cocktailgetränk, bei dem Stücke einer ganzen Limette, also Fruchtfleisch mit Schale, bevorzugt je halbierter Limette 4 Teile in ein Becherglas mit kräftigem Boden sowie zwei Löffel unraffiniertem braunem Rohrzucker gegeben werden. Die gezuckerten Limettenstücke werden dann im Trinkglas manuell mit einem Stößel ausgepreßt. Das Glas mit den ausgepreßten gezuckerten Limettenstücken wird mit gestoßenem Eis befüllt und eine Spirituose aus Zuckerrohr darübergegossen. Nach Umrühren ist der schmackhafte alkoholhaltige Cocktail fertig.

Aufgabe der Erfindung ist es, für die Caipirinhaherstellung eine mechanisierte Unterstützung zum Auspressen der Limettenstücke anzugeben, die bei einem robusten Aufbau ein effektives Auspressen der Limettenstücke erlaubt.

Diese Aufgabe wird ausgehend von einer Caipirinha-Presse gemäß DE 200 12 332 U1 dadurch gelöst, daß die Einrichtung zum Absenken des Preßstempels eine Spindeltriebanordnung mit einer im wesentlichen vertikal in einem Gegenlager geführten Gewindespindel aufweist, die beim Absenken des Preßstempels diesen zusätzlich in eine Rotationsbewegung um die durch die Gewindespindel definierte Achse versetzt, wobei das Gegenlager des Spindeltriebes über einen Teilbereich der Absenkbewegung verschiebbar ausgebildet ist.

Durch das Vorsehen eines Spindeltriebs wird beim Absenken des Preßstempels in das mit Limettenstücken gefüllte Glas die typische Stößelbewegung, nämlich Drücken und Drehen, auf mechanisch robuste und einfache Weise nachgebildet. Die Bedienperson der erfindungsgemäßen. Vorrichtung braucht lediglich das mit Limettenstücken befüllte Glas unter die Caipirinha-Presse stellen und die Absenkbewegung auslösen.

Dadurch, daß das Gegenlager des Spindeltriebes über einen Teilbereich der Absenkbewegung verschiebbar ausgebildet ist, wird die Rotationsbewegung des Preßstempels erst im unteren Teil der Absenkbewegung erzeugt; vorher erfolgt eine reine Absenkbewegung des Preßstempels. Die Rotationsbewegung des Preßstempels erfolgt im unteren Teil der Absenkbewegung, um beim Preßvorgang auf die Limettenstücke die Saftauslösung zu unterstützen. Diese Ausgestaltung verhindert eine unerwünschte Rotation des Preßstempels bei der Absenkbewegung vor dem Eintauchen des Stempels in das Trinkglas. Somit wird verhindert, daß Saft und Fruchtteile unerwünscht zentrifugal verteilt werden.

Bevorzugt wird für die Spindeltriebmechanik ein herkömmlicher Gastronomie-Korkenzieher verwendet, der ebenfalls ein über einen Teilbereich der Absenkbewegung verschiebbar ausgebildetes Gegenlager seines Spindeltriebes aufweist.

Bevorzugt ist zum kraftbetätigten Absenken des Preßstempels ein um eine nahe der und orthogonal zur Spindeltriebachse angeordnete Schwenkachse schwenkbarer Handhebel vorgesehen und der Handhebel mit einem absenkbaren Lager der Gewindespindel wirkverbunden. Damit kann die Bedienperson hohe Preßkräfte auf den Preßstempel und damit die Limettenstücke ausüben, um eine möglichst wirkungsvolle Saftabgabe und Auspressung der Limettenschale zu erreichen. Mit dieser Vorrichtung könnnen eine Vielzahl von Caipirinha-Getränken von einer Bedienperson kräfteschonend und schnell vorbereitet werden.

Bevorzugt ist die Einrichtung zum Absenken des Preßstempels zur Wandbefestigung ausgebildet. Damit kann die erfindungsgemäße Caipirinha-Presse an an Arbeitsflächen angrenzende Wände, beispielsweise Schrankwände, oberhalb der zur Caipirinhaherstellung verwendeten Arbeitsfläche angebracht werden. Die Montagehöhe ist dabei so auszurichten, daß bei vollständigem Absenken des Preßstempels dieser um die Glasbodendicke des Caipirinha-Glases zuzüglich einer Toleranz oberhalb der Arbeitsfläche zustehen kommt.

Dadurch, daß ein unterer Anschlag für die Absenkbewegung des Preßstempels vorgesehen ist, wobei der Anschlag höhenverstellbar, bevorzugt in drei Stufen, ausgebildet ist, kann die Caipirinha-Presse an unterschiedliche Arbeitsbedingungen angepaßt werden. Durch den höhenverstellbaren unteren Anschlag kann das Eintauchen des Preßstempels in das darunter gestellte Glas sowohl auf die Glasform, nämlich die Stärke des Glasbodens, und auch auf die gewünschte Preßwirkung eingestellt werden. Dabei ist wichtig, daß die im Gefäß aufgenommenen Limettenstücke nicht so stark gepreßt werden, daß die in der Schale enthaltenen Bitterstoffe freigesetzt werden. Bevorzugt weist die Höhenverstellung drei verschiedene Stufen auf, die beispielsweise Ober ein Kulissenführung in Art eines Bajonettverschlusses von außen einstellbar ausgebildet sind. Diese drei Höhenstufen können beispielsweise für Pet-Becher (niedrigste Anschlageinstellung), "Pitu"-Gläser (mittlere Einstellung) und übliche Tumbler (höchste Einstellung) eingerichtet werden.

Dadurch, daß die Einrichtung zum Absenken des Preßstempels einen rohrförmigen Führungskörper aufweist, in dessen zylindrischer Innenseite das Gegenlager zwischen dem unteren Anschlag und einem oberen Anschlag verschiebbar ausgebildet ist, kann bei der ersten Absenkbewegung des Preßstempels die gewünschte Rotationsbewegung des Preßstempels erst im unteren Teil der Absenkbewegung erzeugt werden, wohingegen durch nur geringfügiges Anheben des Preßstempels und wieder Niederdrücken eine reine Preßbewegung ohne Rotationsbewegung ausgeführt werden kann. Somit wird zunächst beim Anheben der Spindelanordnung mit der Gewindespindel das Gegenlager aufgrund der Gewindereibung bis zum oberen Anschlag angehoben. Erst danach dreht sich die Spindel beim weiteren Anheben der Spindeltriebanordnung aufgrund des nun am oberen Anschlag fixierten Gegenlagers zurück.

Insbesondere der Preßstempel sollte aus lebensmittelechtem und säurefestem Edelstahl, beispielsweise V4A hergestellt sein. Durch den ständigen Kontakt des Preßstempels mit den Limettenstücken und dem ausgepreßten Limettensaft sind hohe hygienische Anforderungen zu stellen. Da darüber hinaus auch hohe Preßkräfte auftreten, ist dieser Werkstoff bevorzugt. Alternativ kann der Preßstempel auch aus VA-Guß zur Reduzierung der Herstellungskosten erstellt werden.

Ebenso sollte der Spindeltrieb aus entsprechendem Edelstahl hergestellt sein. Bevorzugt ist das Gegenlager des Spindeltriebs aus einem belastungsfähigen, lebensmittelechtem und säurefestem Kunststoff hergestellt. Zur Schmierung des Spindeltriebes wird bevorzugt Schankhahnfett verwendet, da dieses im Kontakt mit Lebensmitteln unbedenklich ist.

Nachfolgend wird ein Ausführungsbeispiel der Erfindung anhand der beiliegenden Zeichnung detalliert beschrieben.
- Fig. 1: zeigt eine erfindungsgemäße Caipirinha-Presse in Grundstellung vor Durchführung eines Auspressvorganges in teils geschnittener Seitenansicht und
- Fig. 2: die in Figur 1 dargestellte Vorrichtung bei Durchführung des Auspressvorganges.

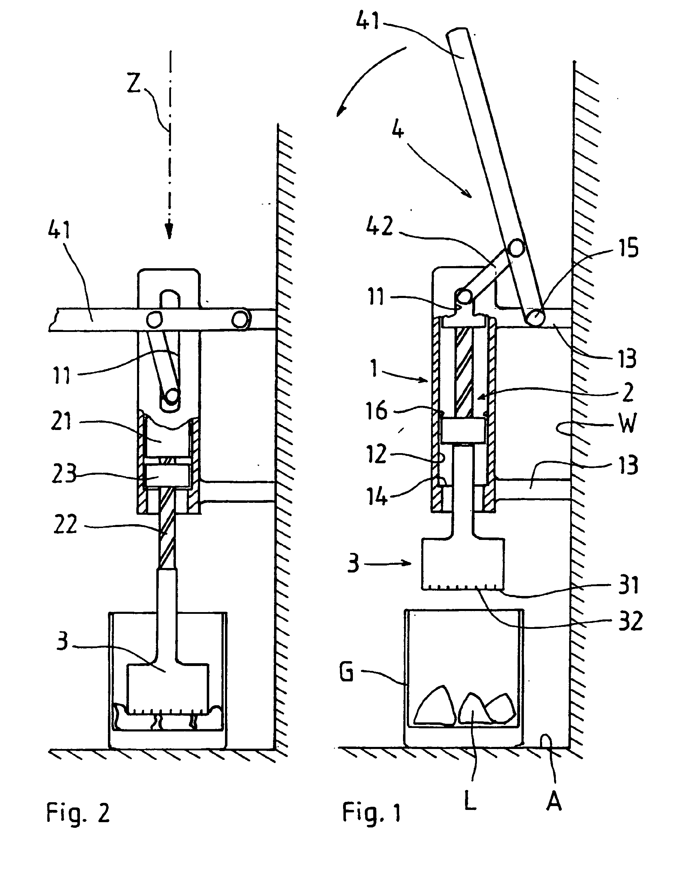

In Figur 1 ist die erfindungsgemäße Caipirinha-Presse mit angehobenem Preßstempel in Grundstellung, teils geschnitten wiedergegeben. Die Vorrichtung besteht aus einem im wesentlichen rohrförmigen Führungskörper 1, in dem zwei in axialer Richtung einander diametral gegenüberliegend angeordnete Langlöcher 11 vorgesehen sind. Die zylindrische Innenseite 12 des rohrförmigen Körpers 1 dient zur Aufnahme und Führung einer Spindeltriebanordnung 2. Der rohrförmige Körper 1 ist über Befestigungsstutzen 13 an einer Wand W befestigt.

Die Spindeltriebanordnung 2 weist ein oberes Lager 21, eine darin drehbar gehalterte Gewindespindel 22 und ein mit entsprechender Gewindebohrung versehenes Gegenlager 23 zur Aufnahme der Gewindespindel 22 auf.

Das Gegenlager 23 der Spindeltriebanordnung 2 ist in axialer Richtung Z des rohrförmigen Körpers 1 verschiebbar ausgebildet, wobei jedoch geeignete Mitnehmer vorgesehen sind, um ein unerwünschtes Mitdrehen des Gegenlagers beim Drehen der Gewindespinde 22 zu vermeiden. Nach etwa halber Absenkbewegung kommt das Gegenlager 23 an einen ersten Anschlag 14 an der zylindrischen Innenseite 12 des rohrförmigen Körpers 1 zur Anlage, womit bei weiterem Absenken die gewünschte Rotationsbewegung durch weiteres Eintauchen der Gewindespindel 22 in das nun ortsfeste Gegenlager 23 bewirkt wird.

Am unteren Ende der Gewindespindel 22 ist ein Preßstempel 3 koaxial befestigt. Der Preßstempel 3 weist eine stößelartige Form auf und besitzt an seiner Unterseite eine im wesentlichen horizontal ausgerichtete Preßfläche 31, die zur Erhöhung des Mitnahmeeffektes bei Drehbewegung des Stempels 3 mit einer Riffelung 32 versehen ist,

Die Absenkbewegung der Spindeltriebanordnung 2 und somit des Preßstempels 3 wird manuell über eine Hebelanordnung 4 von der Bedienperson ausgelöst. Die Hebelanordnung besteht aus einem Hebel 41, der schwenkbar um eine nahe der und orthoganal zur Spindeltriebachse Z angeordnete Schwenkachse 15 am oberen Haltestutzen 13 gehaltert. Auf etwa 1/5 der Länge des Hebels 41 ist ein kurzer Übertragungshebel 42 mit einem Ende drehbar angelenkt, dessen anderes Ende am oberen Lager 21 der Spindeltriebanordnung 2 durch Langloch 11 durchgreifend drehbar befestigt ist und somit die kinematische Verbindung vom Hebel 41 auf die Gewindespindel 22 bildet.

Nachfolgend wird die Arbeitsweise mit der erfindungsgemäßen Caipirinha-Presse anhand des Ausführungsbeispiels beschrieben.

In der in Figur 1 dargestellten Grundstellung wird das mit Limettenstücken L gefüllte Trinkglas G auf der vor der Wand W angeordneten Arbeitsfläche A unter die Caipirinha-Presse, d.h. unter den Preßstempel 3 geführt. Durch Betätigung der Hebelanordnung 4 durch Herunterdrücken des Hebels 41 wird der Preßstempel 3 über die Spindeltriebanordnung 2 abgesenkt. Dabei taucht der Preßstempel 3 in das Glas G ein. Bei weiterem Niederdrücken des Hebels 41 gelangt das Gegenlager 23 der Spindeltriebanordnung 2 am ersten Anschlag 14 zur Anlage, womit beim weiteren Absenken die Gewindespindel 22 mit daran befestigtem Preßstempel 3 in Rotation versetzt wird.

Entsprechend werden die im Glas G vorgehaltenen Limettenstücke L von der Preßfläche 31 des Preßstempels 3 in einer drehenden Preßbewegung beansprucht. Fruchtsaft aus dem Fruchtfleisch und Fruchtöl aus der Fruchtschale treten aus. Bevorzugt wird der Preßvorgang durch vollständiges Anheben des Hebels 41 und erneutes Niederdrücken wiederholt.

Danach kann durch nur geringfügiges Anheben des Hebels 41 und wieder Niederdrücken eine reine Preßbewegung ohne Rotationsbewegung ausgeführt werden. Diese Bewegung ist möglich, da das in der zylindrischen Innenseite 12 des rohrförmigen Körpers 1 geführte Gegenlager 23 zwischen dem ersten Anschlag 14 und einem oberen Anschlag 16 verschiebbar ausgebildet ist. Beim ersten Anheben der Spindeltriebanordnung 2 über Hebelanordnung 4 wird mit der Gewindespindel 22 das Gegenlager 23 aufgrund der Gewindereibung bis zum oberen Anschlag 16 angehoben. Erst danach dreht sich die Spindel 22 beim weiteren Anheben der Spindeltriebanordnung 2 aufgrund des nun fixierten Gegenlagers 23 zurück.

Somit kann bei leichtem Anheben des Preßstempels 3 Ober die Hebelanordnung 4 von der unteren Arbeitsstellung und erneutem Niederdrücken eine reine Preßbewegung ohne Rotation ausgeführt werden.

Ein bevorzugter Betätigungszyklus zum Vorbereiten eines Caipirinha-Glases besteht aus zwei nacheinander durchgeführten vollständigen Bewegungsabläufen - Niederdrücken von der Grundstellung bis zur Arbeitsstellung, Anheben bis zur Grundstellung, Niederdrücken bis zur Arbeitsstellung - und drei reine Preßvorgänge - geringfügiges Anheben, Niederdrücken, wieder geringfügiges Anheben, Niederdrücken, und letztmaliges geringfügiges Anheben und Niederdrücken.

### Bezugzeichenliste

- 1: rohrförmiger Körper
- 11: Langloch
- 12: zylindrische Innenseite
- 13: Haltestutzen
- 14: erster Anschlag
- 15: Schwenkachse
- 16: oberer Anschlag
- 2: Spindeltriebanordnung
- 21: oberes Lager
- 22: Gewindespindel
- 23: Gegenlager
- 3: Preßstempel
- 31: Preßfläche
- 32: Riffelung
- 4: Hebelanordnung
- 41: Hebel
- 42: Übertragungshebel
- A: Arbeitsplatte
- L: Limettenstücke
- W: Wand
- Z: Spindeltriebachse; Absenkbewegungsrichtung

## Patentansprüche

1. Caipirinha-Presse mit einem Preßstempel (3) zum Zerdrücken von in einem Glas (G) eingelegten Limettenstücken (4) und mit einer Einrichtung zum Absenken des Preßstempels (3) in das Glas (G), wobei die Einrichtung zum Absenken des Preßstempels (3) eine Spindeltriebanordnung (2) mit einer im wesentlichen vertikal in einem Gegenlager (23) geführten Gewindespindel (22) aufweist, die beim Absenken des Preßstempels (3) diesen zusätzlich in eine Rotationsbewegung um die durch die Gewindespindel (22) definierte Achse (Z) versetzt, **dadurch gekennzeichnet, daß** das Gegenlager (23) des Spindeltriebes (2) über einen Teilbereich der Absenkbewegung (Z) verschiebbar ausgebildet ist, so daß die Rotationsbewegung des Preßstempels (3) erst im unteren Teil der Absenkbewegung erzeugt wird.

2. Caipirinha-Presse nach Anspruch 1, **dadurch gekennzeichnet, daß** zum kraftbetätigten Absenken des Preßstempels (3) ein um eine nahe der und orthogonal zur Spindeltriebachse (Z) angeordnete Schwenkachse (15) schwenkbarer Handhebel (41) vorgesehen ist und der Handhebel (41) mit einem absenkbaren Lager (21) der Gewindespindel (22) wirkverbunden ist.

3. Caipirinha-Presse nach Anspruch 1 oder 2, **dadurch gekennzeichnet, daß** die Einrichtung zum Absenken des Preßstempels (3) zur Wandbefestigung ausgebildet ist.

4. Caipirinha-Presse nach Anspruch 1, 2 oder 3, **dadurch gekennzeichnet, daß** ein unterer Anschlag (14) für die Absenkbewegung (Z) des Preßstempels (3) vorgesehen ist, wobei der Anschlag höhenverstellbar, bevorzugt in drei Stufen, ausgebildet ist.

5. Caipirinha-Presse nach Anspruch 1, 2, 3 oder 4, **dadurch gekennzeichnet, daß** die Einrichtung zum Absenken des Preßstempels (3) einen rohrförmigen Führungskörper (1) aufweist, in dessen zylindrischer Innenseite (12) das Gegenlager (23) zwischen dem unteren Anschlag (14) und einem oberen Anschlag (16) verschiebbar ausgebildet ist.

6. Caipirinha-Presse nach Anspruch 1, 2, 3, 4 oder 5, **dadurch gekennzeichnet, daß** der Preßstempel (3) aus lebensmittelechtem und säurefestem Edelstahl hergestellt ist.

7. Caipirinha-Presse nach einem der vorangehenden Ansprüche, **dadurch gekennzeichnet, daß** die Gewindespindel (22) aus lebensmittelechtem und säurefestem Edelstahl und das Gegenlager (23) des Spindeltriebes (2) aus lebensmittelechtem und säurefestem Kunststoff bestehen.

8. Caipirinha-Presse nach einem der vorangehenden Ansprüche, **dadurch gekennzeichnet, daß** die Preßfläche (31) des Stempels eine Strukturierung (Riffelung) (32) aufweist.

## Claims

1. A caipirinha press with a plunger (3) for crushing lime wedges (4) [*sic* - *recte* L] placed in a glass (G) and with a device for lowering the plunger (3) into the glass (G), wherein the device for lowering the plunger (3) has a spindle drive arrangement (2) with a threaded spindle (22) which is guided substantially vertically in a thrust bearing (23) and which, when the plunger (3) is lowered, additionally sets the latter into rotation about the axis (Z) defined by the threaded spindle (22), **characterised in that** the thrust bearing (23) of the spindle drive (2) is formed so as to be displaceable over part of the lowering movement (Z) so that the rotation movement of the plunger (3) is not generated until the lower portion of the lowering movement.

2. A caipirinha press according to claim 1, **characterised in that**, to lower the plunger (3) by power actuation, a hand lever (41) is provided which is pivotable about a pivoting axis (15) arranged in the vicinity of and orthogonally to the spindle drive axis (Z), and the hand lever (41) is operatively connected to a lowerable bearing (21) of the threaded spindle (22).

3. A caipirinha press according to claim 1 or 2, **characterised in that** the device for lowering the plunger (3) is formed for wall mounting.

4. A caipirinha press according to claim 1, 2 or 3, **characterised in that** a lower stop (14) is provided for the lowering movement (Z) of the plunger (3), wherein the stop is formed so as to be vertically adjustable, preferably in three stages.

5. A caipirinha press according to claim 1, 2, 3 or 4, **characterised in that** the device for lowering the plunger (3) has a tubular guide body (1), in the cylindrical interior (12) of which the thrust bearing (23) is formed so as to be displaceable between the lower stop (14) and an upper stop (16).

6. A caipirinha press according to claim 1, 2, 3, 4 or 5, **characterised in that** the plunger (3) is manufactured from food-safe and acid-resistant stainless steel.

7. A caipirinha press according to any one of the preceding claims, **characterised in that** the threaded spindle (22) comprises food-safe and acid-resistant stainless steel, and the thrust bearing (23) of the spindle drive (2) comprises food-safe and acid-resistant plastics.

8. A caipirinha press according to any one of the preceding claims, **characterised in that** the pressing surface (31) of the plunger is structured (ribbed) (32).

## Revendications

1. Presse à caipirinha avec un fouloir de presse (3) pour écraser des morceaux de citron vert (4) placés dans un verre (G) et avec un dispositif pour abaisser le fouloir de presse (3) dans le verre (G), le dispositif étant muni pour abaisser le fouloir de presse (3) d'un dispositif (2) pour entraîner une broche ayant une broche filetée (22) guidée essentiellement verticalement dans un palier support (23) et qui, lorsque le fouloir de presse (3) est abaissé, l'entraîne en outre dans un mouvement de rotation autour de l'axe (Z) défini par la broche filetée (22), **caractérisée en ce que** le palier support (23) de l'entraînement (2) de la broche peut être déplacé le long d'une partie du mouvement de descente (Z) de sorte que le mouvement de rotation du fouloir de presse (3) n'est réalisé que dans la partie inférieure du mouvement de descente.

2. Presse à caipirinha selon la revendication 1, **caractérisée en ce que** pour la descente actionnée par force du fouloir de presse (3) il est prévu un levier à main (41) pouvant basculer autour d'un axe de basculement (15) situé à proximité de l'axe d'entraînement (Z) de la broche filetée et orthogonalement à ce dernier.

3. Presse à caipirinha selon la revendication 1 ou 2, **caractérisée en ce que** le dispositif pour abaisser le fouloir de presse (3) peut être fixé au mur.

4. Presse à caipirinha selon la revendication 1, 2 ou 3, **caractérisée en ce qu'**une butée inférieure (14) est prévue pour le mouvement de descente (Z) du fouloir de presse (3), la butée pouvant être réglée en hauteur, de préférence en trois niveaux.

5. Presse à caipirinha selon la revendication 1, 2, 3 ou 4, **caractérisée en ce que** le dispositif pour abaisser le fouloir de presse (3) comprend un corps de guidage cylindrique (1) dans la face intérieure cylindrique (12) duquel le palier support (23) peut être déplacé entre la butée inférieure (14) et une butée supérieure (16).

6. Presse à caipirinha selon la revendication 1, 2, 3, 4 ou 5, **caractérisée en ce que** le fouloir de presse (3) est fabriqué dans de l'acier inoxydable pour denrées alimentaires et résistant à l'acide.

7. Presse à caipirinha selon l'une des revendications précédentes, **caractérisée en ce que** la broche filetée (22) est en acier inoxydable pour denrées alimentaires et résistant à l'acide et le palier support (23) de l'entraînement de la broche (2) est en matière plastique pour denrées alimentaires et résistant à l'acide.

8. Presse à caipirinha selon l'une des revendications précédentes, **caractérisée en ce que** la surface pressante (31) du fouloir de presse présente une structure (cannelage) (32).
